(19) Europäisches Patentamt
European Patent Office
Office européen des brevets

(11) Publication number: **0 200 181 A2**

(12) **EUROPEAN PATENT APPLICATION**

(21) Application number: **86105784.2**

(22) Date of filing: **25.04.86**

(51) Int. Cl.[4]: **C08F 2/42**, C08F 14/06, C08L 27/06, C08K 5/00, C08K 5/13

(30) Priority: **29.04.85 US 728549**
**29.04.85 US 728548**

(43) Date of publication of application:
**10.12.86 Bulletin 86/45**

(84) Designated Contracting States:
**BE CH DE FR GB IT LI NL SE**

(71) Applicant: **The B.F. GOODRICH Company**
**Dept. 0015 WHB-6 500 South Main Street**
**Akron, Ohio 44318(US)**

(72) Inventor: **Sharaby, Zaev**
**3391 Altamont Avenue**
**Cleveland Ohio 44118(US)**
Inventor: **Vyvoda, Josef Cyril**
**287 Greenbriar Drive**
**Avon Lake Ohio 44012(US)**

(74) Representative: **von Kreisler, Alek, Dipl.-Chem. et al**
**Deichmannhaus am Hauptbahnhof**
**D-5000 Köln 1(DE)**

(54) **Process for shortstopping free radical polymerization and stabilized resin compositions.**

(57) It has been found that substituted hydroquinones function as a shortstop agent in the polymerization of vinyl monomers. The substituted hydroquinones have the formula:

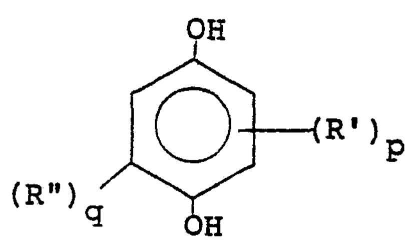

wherein R' = 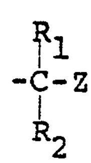 and R" = 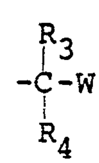

EP 0 200 181 A2

wherein p is 1 or 2 and q is 0 or 1; provided that p+q = 1 or 2.

The groups $R_1$, $R_2$, $R_3$, $R_4$, Z and W are defined hereafter.

The compounds 2,5-di-t-amylhydroquinone and 2,5-di-t-butylhydroquinone are particularly desirable as shortstop agents in the polymerization of vinyl chloride. These hydroquinones also function as stabilizers for the resin and finished articles made therefrom.

# PROCESS FOR SHORTSTOPPING FREE RADICAL POLYMERIZATION AND STABILIZED RESIN COMPOSITIONS

## BACKGROUND OF THE INVENTION

In the polymerization of olefinic monomers having a terminal $CH_2=C<$ grouping such as vinyl chloride with free radical catalysts, particularly those containing oxygen, it is generally desirable to stop the reaction after the polymerization has reached a predetermined state in order to obtain stable, uniform polymers. Sometimes it is also necessary to stop or slow down reactions that are proceeding at a faster rate than is desirable. Also, in many polymerization systems, it is often desirable to stop the polymerization reaction short of complete conversion so that an effective agent of some kind must be employed to stop the reaction quickly without adversely affecting the polymerization product. The problem is particularly acute when employing the more active catalysts that give extremely fast polymerization rates and with, for example, vinyl chloride polymers that are subject to thermal degradation.

Polyvinyl chloride may be produced by the suspension, micro-suspension, or emulsion process whereby vinyl chloride monomer droplets are suspended and polymerized in an aqueous medium. Another polymerization method is to use a modified suspension process as is taught by U.S. patent 4,435,524 (incorporated herein by reference) wherein the aqueous medium is in a thickened state. This thickened aqueous suspension process produces spherical shaped resin particles which have obvious advantages. The resins spherical shape can be determined by comparing the ratio of the minor axis with the major axis using microscopic techniques well known in the art. A perfect circle would have a ratio of 1.0. The resins are considered spherical if they have a ratio greater than 0.9. Each of these processes present unique problems associated with shortstopping the polymerization reaction. Shortstop agents are normally employed in the typical suspension polymerization process to counteract this degradation and to control the resin properties. In the modified suspension process (thick aqueous medium), some shortstops that are effective for the normal suspension process will not work in the thickened medium. Apparently, they will not diffuse through the thickened medium and into the polymer. Also, resins which have low porosity are difficult to shortstop because of the difficulty in the shortstop agent diffusing into the low porosity resin.

A still further polymerization method is the bulk or mass process. The mass process normally has just the monomer(s) and initiator. Water is not present. The process depends on a two-stage polymerization. In the first stage, which operated with strong agitation, the oil-soluble, free radical catalyst and the monomer are raised to the reaction temperature. Almost immediately, the solution becomes opalescent from formation of polymer chains, and as polymerization increases, these chains agglomerate and form small particules in the range of 0.1 micron. After about 10% conversion the liquid is transferred to a second vessel. This second vessel is horizontal and has a ribbon blender type of agitation that operates much more slowly; and in this vessel the particles are allowed to grow. The reaction medium goes through a gell state at about 30% conversion and then a wet powder state and finally a dry powder at about 50% conversion. The resin is stripped and dried in the polymerizer. The mass process leads to a resin which is free of an encapsulating skin which is also known as a pericellular membrane. Suspension process resins have a pericellular membrane, but mass process resins do not. Shortstop agents are not normally used in the mass process.

In the manufacture of homopolymers and copolymers of olefinic monomers, and particularly from vinyl halides and vinylidene halides, one of the most important aspects is reaction control during the entire course of the polymerization. This is related, directly or indirectly, to such things as demands on heat exchange equipment, reactions with such a fast rate that they become uncontrolled, formation of off-specification products, and the like. Accordingly, some means to terminate permanently or temporaily a polymerization, such as this, at any given time would be most desirable. When a polymerization plant experiences a loss of agitation or cooling ability, usually through power failure, these exothermic reactions can build up heat and pressure to the point of endangering workers and equipment. These out of control reactions must be stopped very quickly by use of what is known in the art as emergency shortstops. To be effective as an emergency shortstop, the shortstop must diffuse very quickly through the reaction medium and into the polymer.

Heretofore, various shortshopping agents have been employed to terminate the polymerization of monoolefinically unsaturated monomers. However, many of these shortstopping agents require large amounts to be effective or are toxic. Others operate

by destroying the catalyst such as those disclosed in U.S. Patent 3,637,632. Further, many of these shortstopping agents have been found to be ineffective in completely halting the polymerization or have been found to be effective only in such concentrations as result in discoloration of the polymer product. Free radical initiators used in the polymerization of polyvinyl chloride increase the rate of polymerization. However, these same initiators contribute to the degradation of the polymer during the stipping and drying operations that occur after polymerization.

It is a desirable goal to have an effective, non-toxic shortstop agent for shortstopping polymerization of olefinic monomers. It is desirable to have an effective non-toxic emergency shortstop. It would also be desirable to be able to shortstop and stabilize polyvinyl chloride made by the mass process and by the thickened aqueous suspension process.

Polyvinyl chloride resins are also subjected to high temperature environments after the polymer is made. It is normal for the polymer to be subjected to steam stripping, drying, and processing operations all of which subject the polymer to some thermal degradation and are normally performed at a higher temperature than the polymerization temperature. Steam stripping can reach temperatures of about 140°C and subject the polymer to degradation.

To protect these vinyl halide resins from heat degradation, it is customary to add materials known as stabilizers. Stabilizers are usually added by the formulaters at the time other ingredients such as processing aids, fillers, colorants and the like are added. This method of adding the stabilizers at the time of compounding is satisfactory, but it leaves the resin unprotected against heat during post polymerization manufacturing operations such as stripping and drying. In some circumstances this delay in adding the stabilizer will result in off-color or dark resin.

Stabilizers are not normally added prior to or during the stripping operation because of a tendency of these materials to contaminate the recovered monomer and to be relatively ineffective when added to a wet resin. Unreacted monomer is captured and recycled to make polymer from the post polymerization operation (blowdown tank, stripper and dryer). If stabilizers are carried over by the recycled monomer, they can adversely effect the later polymerizations.

Many stabilizers have been proposed for vinyl halide polymers and several have enjoyed wide acceptance of the industry. Stabilizers usually fall within one of four classes: (1) inorganic compounds; (2) metallo-organic salts or soaps - (sometimes included under th inorganic class); (3) true organometallics containing a carbon-to-metal bond; and (4) pure organic compounds. Many of these stabilizers, although effective, are not approved for applications which come in contact with food and beverages.

It would be desirable to have a vinyl halide resin which is stabilized against heat degradation during post polymerization manufacturing operations and later end uses. It would also be desirable to have a stabilizer which is suitable for use in food grade applications.

## SUMMARY OF THE INVENTION

It has been found that in the polymerization of vinyl monomers, either alone, or copolymerized with monomers having a terminal $CH_2=C<$ grouping, with a catalyst or catalyst system, the polymerization reaction is effectively stopped or slowed by the addition to the reaction mixture of at least one 2,5 substituted hydroquinone having the formula

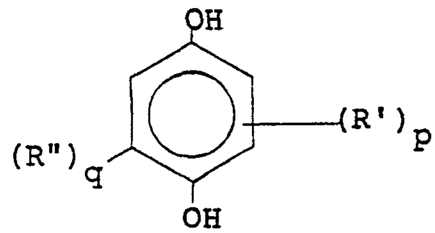

wherein 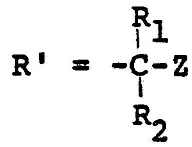 and 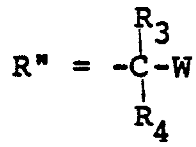

wherein p is 1 or 2 and q is 0 or 1; provided that $p+q=1$ or 2.

The groups $R_1$, $R_2$, $R_3$, $R_4$ are either H, $CH_3$, or $C_2H_5$ and are identical or different. The groups Z and W may be identical or different and are either H, $C_1$ to $C_{12}$ hydrocarbon, $OR_5$, $SR_5$,

phenyl, alkyl benzene, $C_nH_{2n+1-k}$-$(X)_t$-$R_6$ wherein n is an integer from 1 to 20, $k=1$ or 2, $t=0$ or 1,

$X=$ -O-or - $\overset{O}{\overset{\|}{C}}$ -O-; wherein $R_5$ and $R_6$ are H or $C_1$-$C_{12}$ hydrocarbon, CN, or $C_nH_{2n+1-k}CN$ wherein n and k are as defined above.

Preferably the hydroquinone is a 2,5 hydroquinone having the formula

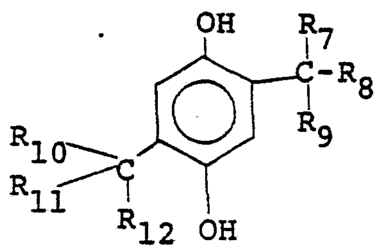

wherein $R_7$, $R_8$, $R_{10}$ and $R_{11}$ are identical or different and are either H, methyl, or ethyl. $R_9$ and $R_{12}$ are identical or different and are either H, or an alkyl having from 1 to about 12 carbon atoms. Preferably, $R_7$, $R_8$, $R_{10}$ and $R_{11}$ are methyl and $R_9$ and $R_{12}$ are either methyl or ethyl.

Polymers produced by the above process using substituted hydroquinones may also be stabilized against heat degradation during the post polymerization polymer manufacturing operations as well as stabilized for end use.

## DETAILED DESCRIPTION

While the process of the present invention is applicable to any polymerization system normally employed to polymerize olefinic monomers wherein a free radical yielding catalyst is used, such as bulk, solution, aqueous suspension, micro-suspension, aqueous emulsion, batch or continuous, and the like, for simplicity of description the invention will be described as it is applicable to the polymerization of vinyl chloride to form polyvinyl chloride. It is understood, however, that this is merely intended in an illustrative sense.

The monomers which may be employed in the present invention include vinyl chloride and polymerizable olefinic monomers copolymerizable therewith having at least one terminal $CH_2=C<$ grouping such as the other vinyl halides and vinylidene halides, for example, vinyl bromide, vinylidene chloride, etc.; acrylic acid; esters of acrylic acid, such as methyl acrylate, ethyl acrylate, butyl acrylate, octyl acrylate, cyanoethyl acrylate, and the like; methacrylic acid; esters of methacrylic acid such as methyl methacrylate, butyl methacrylate and the like; nitriles such as acrylonitrile, methacrylonitrile, etc; acrylamides, such as methyl acrylamide, N-methylol acrylamide, N-butoxy methacrylamide, and the like; vinyl

ethers, such as ethyl vinyl ether, chloroethyl vinyl ether, and the like; the vinyl ketones, such as methyl vinyl ketone, etc.; vinyl naphthalene; allyl and vinyl chloroacetate; vinyl acetate; vinyl pyridine; and mixtures of any of these types of monomers and other olefinic monomers copolymerizable therewith including esters of maleic and fumaric acid, and the like; and other copolymerizable olefinic monomers of the types known to those skilled in the art. The present invention is particularly applicable to the polymerization of vinyl chloride, either alone, or in admixture with one or more other polymerizable olefinic monomers having at least one terminal $CH_2=C<$ grouping in amounts up to about 50% by weight of comonomer, preferably up to about 20% by weight of comonomer, based on the weight of the monomer mixture.

Among the catalysts or initiators that may be employed in the present process are the free radical yielding catalysts or initiators, such as the alkanoyl, aroyl, alkaroyl and aralkanoyl diperoxides and monohydroperoxides, azo compounds, peroxyesters, percarbonates, and the like. As examples of such catalysts, there may be named benzoyl diperoxide, lauryl diperoxide, diacetyl peroxide, cumene hydroperoxides, hydrogen peroxide, methyl ethyl ketone peroxide, diisopropylbenzene hydroperoxide, 2,4-dichlorobenzoyl peroxide, benzoyl peroxide, naphthoyl peroxide, lauroyl peroxide, acetyl cyclohexane sulfonyl peroxide, t-butyl perbenzoate, di-t-butyl perphathalate, diisopropyl peroxydicarbonate, di(sec-butyl) peroxydicarbonate, and the like, azo-bisisobutyronitrile, α, α'-azodiisobutyrate, and the like, etc. Found useful are lauroyl peroxide, di(2-ethyl hexyl) peroxydi-carbonate, di-ethyl peroxydicarbonate, di(n-propyl) peroxydicarbonate, diisopropyl peroxydicarbonate, di-(sec-butyl) peroxydicarbonate and acetyl cyclohexane sulfonyl peroxide. The choice of any particular free radical yielding catalyst is dictated in part by the particular monomer or monomers to be polymerized and by the color requirements of the polymer or copolymer to be produced. Further, more than one catalyst may be employed in the polymerization recipe. Usually, the amount of catalyst or catalysts employed will be in the range of about 0.005% to about 1% by weight, based on the weight of the monomer or monomers being polymerized. Preferably, the amount of catalyst(s) will be in the range of about 0.02% to about 0.10% by weight.

The shortstopping agents suitable for use in this invention are substituted hydroquinones having the formula:

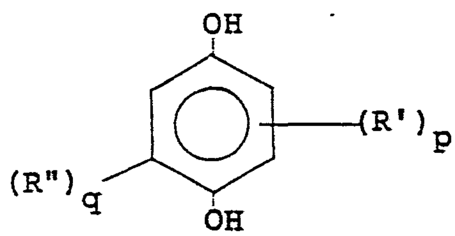

wherein R' = 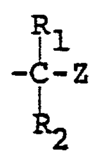 and R" = 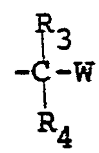

wherein p is 1 or 2 and q is 0 or 1; provided that p+q=1 or 2.

The groups $R_1$, $R_2$, $R_3$, $R_4$ are either H, $CH_3$, or $C_2H_5$ and are identical or different. The groups Z and W may be identical or different and are either H, $C_1$ to $C_{12}$ hydrocarbon, $OR_5$, $SR_5$, phenyl, alkyl benzene, $C_nH_{2n+1-k}$-$(X)_t$-$R_6$ wherein n is an integer from 1 to 20, k=1 or 2, t=0 or 1,

X= -O-or - $\overset{O}{\overset{\|}{C}}$ -O-; wherein $R_5$ and $R_6$ are H or $C_1$-$C_{12}$ hydrocarbon, CN, or $C_nH_{2n+1-k}CN$ wherein n and k are as defined above. The $C_1$ to $C_{12}$ hydrocarbon for Z, W, $R_5$ and $R_6$ may be straight or branched alkyl, $C_3$ to $C_{12}$ straight or branched alkenyl, or $C_3$ to $C_{12}$ cycloalkenyl.

Preferably the hydroquinone is a 2,5 hydroquinone having the formula

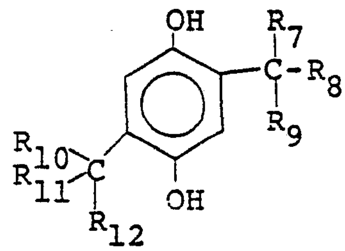

wherein $R_7$, $R_8$, $R_{10}$ and $R_{11}$ are identical or different and are either H, methyl, or ethyl. $R_9$ and $R_{12}$ are identical or different and are either H, or an alkyl having from 1 to about 12 carbon atoms. Preferably, $R_7$, $R_8$, $R_{10}$ and $R_{11}$ are methyl and $R_9$ and $R_{12}$ are either methyl or ethyl.

Examples of suitable preferred shortstops are 2,5-di-t-amylhydroquinone; 2,5-di-t-butyl hydroquinone, a material sold by Uniroyal Chemicals under the tradename of Naugard 451, and the like. Naugard 451 would conform to the above formula where $R_7$ and $R_{10}$ are methyl, $R_8$ and $R_{11}$ are H and $R_9$ and $R_{12}$ are an alkyl having 10 to 12 carbon atoms. The compounds 2,5-di-t-amylhydroquinone and 2,5-di-t-butylhydroquinone are particularly desirable as shortstop agents of this invention. More than one hydroquinone may be used to shortstop a reaction.

The substituted hydroquinones of this invention are readily prepared by alkylation of hydroquinone according to the teachings of U.S. Patent 3,832,808, which is hereby incorporated by reference. They are also prepared according to the teachings of U.S. Patent 4,484,000, which is hereby incorporated by reference.

The amount of substituted hydroquinone used as a shortstop agent will vary depending on the desired effect on the polymerization reaction. It may be desirable to stop the polymerization reaction or one may wish to only slow the reaction. The amount used also depends on the type and amount of catalyst present. Normally the amount used is from about 0.0005 to about 0.0600 part by weight of shortstop agent per 100 parts by weight of monomer. For shortstopping a normal reaction, the amount used is from about 0.0025 to about 0.0100 part by weight per 100 parts by weight of monomer. Larger amounts may be necessary for emergency shortstopping. Smaller amounts may be used if one wishes to slow down the reaction without completely stopping the reaction. Amounts larger than 0.0600 part by weight per 100 parts by weight of monomer may be useful, if one wishes to stop the reaction and to further stabilize the polymer against color development.

In the vinyl chloride polymerization reaction, the typical amount of substituted hydroquinone necessary to stop the reaction is an amount of from about 0.0025 to about 0.0100 part by weight per 100 parts by weight of monomer. A substantial excess of shortstop agent is normally not necessary, but if more than the normal amount is added, it will do no harm since it is not necessary to remove the shortstop agent from the resin or polymer. Excess amounts of shortstop will function as a stabilizer for the polymer in later end use applications. The shortstop stabilizes the polymer by protecting against free radical attack.

While the shortstopping agent may be added to the reaction mixture as such, it may also be added as a mixture with an organic solvent such as an alcohol such as methanol and the like. Also, an aqueous dispersion can be prepared with the shortstop by using dispersants well known to those in the art. The shortstop can be added as an aqueous dispersion. The shortstop can be added in the reactor at the end of the polymerization, or in the recovery stage such as blowdown tank, stipper and the like. Preferably the shortstop is added in the polymerization reactor after the desired degree of conversion is obtained. Of course, for emergency shortstopping the addition would occur in the polymerization reactor.

The amount of the substituted hydroquinone used to act as a stabilizer in this invention is from about 0.0010 to about 0.1000 part by weight per 100 parts by weight of vinyl halide polymer. Preferably the amounts used are from about 0.0050 to about 0.0200 part by weight per 100 parts by weight of vinyl halide polymer. Amounts higher than about 0.1000 part by weight per 100 parts by weight of polymer are normally not necessary, however, for special high heat applications, larger amounts may be desirable. Amounts larger than 0.1000 part by weight per 100 parts by weight of vinyl polymer result in even further stability in color but are normally not necessary.

When the stabilizer is added to the polymerization vessel, blowdown tank or other location prior to drying, the levels are expressed in terms of parts by weight per 100 parts by weight of monomer in the polymerization recipe. If the stabilizer is added to a dry resin, then the level is expressed as parts by weight per 100 parts by weight of polymer or resin. There is a small difference, because all of the monomer in the polymerization recipe does not convert to polymer. Usually the conversion in from about 60 to 90 percent of monomer is converted to polymer.

When polymerizing olefinic monomers by the suspension polymerization process, it is advantageous to add to the liquid reaction medium a small amount of a dispersant. The purpose of the dispersant is to obtain a more complete and uniform dispersal of the monomer(s) and catalyst(s) throughout the reaction medium prior to and during the polymerization of the monomer(s). Any of the well known dispersants operative in aqueous media may be employed. These include, among others, methyl cellulose, hydroxypropyl methyl cellulose, polyvinyl alcohol, dodecylamine hydrochloride, sodium lauryl sulfonate, lauryl alcohol, sorbitan monolaurate polyoxyethylene, nonylphenoxy polyoxyethylene ethanol, hydrolyzed polyvinyl acetates, polyacrylic acid polymers, polyethylene oxide containing surfactants and non-polyethylene oxide containing surfactants, etc. The amount of dispersant employed will be in the range of about 0.01% to about 1.0% by weight, based on the weight of the monomer(s), to give satisfactory results. Preferably, however, the dispersant is employed in the range of about 0.02% to about 0.15% by weight.

In aqueous suspension polymerization the reaction is usually conducted at a temperature in the range of about 0°C to about 100°C depending upon the particular monomer or monomers being polymerized. It is preferred, however, to employ temperatures in the range of about 40°C to about 85°C, since, at these temperatures, polymers having the most all around beneficial properties are produced. This is particularly so in the case of making homopolymers and copolymers of vinyl chloride. The time of the reaction will vary from about 2 to about 15 hours. However, with the shortstopping agents of the present invention the reaction can be slowed down and stopped at any convenient point, such as just before the reaction "tailpeaks", that is, when the temperature of the reaction rises significantly above its set point. Also, runaway reactions can be avoided with the shortstopping agents of the present invention.

The suspension polymerization process may be carried out at autogenous pressures although superatmospheric pressures of up to 10 atmospheres or more may be employed with some advantage with the more volatile monomers. Superatmospheric pressures may also be employed with those monomers having the requisite volatilities at reaction temperatures permitting reflux cooling of the reaction mixtures.

Further, the suspension polymerization process may be carried out utilizing a full reactor technique. That is, the reaction vessel is filled to a predetermined level with the polymerization medium and kept that way during the course of the reaction cycle by constant addition thereto of water, or additional makeup liquid containing the monomer or monomers in the same proportion as at startup. When the desired conversion of monomer(s) to polymer is reached, which can be predetermined from the amount of liquid added to the reaction mixture, the reaction is terminated by the addition of the shortstopping agents of this invention. The necessity for the addition of liquid is due to the shrinkage in volume of the reaction medium produced by the conversion of the monomer(s) to the polymeric state.

The stabilizer of this invention may be added to the vinyl halide polymer at any time once the polymer is polymerized to the desired state. For example, the stabilizer may be added in the polymerizer, blowdown tank, stripper, dryer, or during the formulation operations such as milling, extruding, blending and the like. The stabilizer may be added in one addition or multiple additions. For example, a small amount of about 0.0025 part by weight per 100 parts by weight of monomer may be added in the polymerizer and the remainder added during the formulation or compounding operation. For best results, or least about 0.0010 part by weight per 100 parts by weight of monomer should be added before the resin is stripped so as to protect the resin from the exposure to heat during stripping. The polymerizer or blowdown tank are the preferred places to add the stabilizer because the stabilizer is very soluble in the monomer and is carried into and diffused throughout the polymer. Excellent dispersion of the stabilizer is achieved by adding it in the polymerization reactor.

If the stabilizer of this invention is added prior to drying, it is preferred to add the stabilizer as a solution dissolved in an organic solvent such as an alcohol, although the stabilizer could be added as an aqueous dispersion. If added in the compounding operations, the stabilzer is preferably added as a powder and mixed into the polymer in a customary manner as is well known to those skilled in

the art. More than one stabilizer of this invention may be added to the resin. Also stabilizers known before this invention may be added with the stabilizer of this invention in the formulation operations of mixing, extruding and the like. It is not recommended to add conventional stabilizers in the predrying operations.

The excellent ability of the stabilizers of this invention to diffuse into the polymer allows them to be added in the polymerizer, blowdown tank, or stripper. This is an unusual feature of a stabilizer and most would not be added at this early stage because they would be lost in the water removal and monomer stripping operations. Also some stabilizers would be carried over in the monomer recovery system and contaminate subsequent polymerization batches.

Another important feature of the stabilizers of this invention is their non toxic nature. For example, 2,5-di-t-amylhydroquinone is approved by the United States Food and Drug Administration for use in contact with food.

An excellent test to determine the thermal stability of a vinyl halide resin is to measure the HCl evolution rate at 190°C. In this test the resin sample is exposed to 190°C temperature. Gaseous hydrogen chloride is eliminated from isothermally degraded resins and is transported by an inert carrier gas into an analyzer flask containing deionized water. The concentration of HCl in the analyzer flask is determined by the continuous measurement of the conductivity of the HCl solution. The result is expressed as mol percent of available HCl eliminated versus time.

Another measure of thermal stability of a vinyl halide resin is color development test. This test measures the change in color when a resin is exposed to heat. The test method is to expose resin samples to air at 104°C for different times. Samples are removed from the heat exposure at periodic time intervals and dissolved as a 10% solution in THF solvent. The optical density at 360 nanometers is measured. The darker the resin becomes from degradation the higher the optical density will be.

The following specific examples are given by way of illustration of the invention and are not intended to be limitative. In the examples, all parts and percentages are by weight unless otherwise indicated. The examples are shown using a vinyl chloride polymerization reaction. Examples I through V are presented to show the process of shortstopping while Example VI and VII are presented to show the effectiveness of the substituted hydroquinone as a stabilizer.

EXAMPLE I

This example is presented to show that 2,5-di-t-amylhydroquinone is a very effective shortstop agent in a modified suspension (thickened medium) polymerization of vinyl chloride which produces spherical shaped resins. The novel shortstop of this invention is compared with other known shortstops. The polymerization recipe employed was as follows:

| Ingredient | Parts by weight |
|---|---|
| Vinyl chloride | 100 |
| Water (demineralized) | 240 |
| Polyacrylic acid dispersant | 0.08 |
| Polyethylene oxide containing surfactant | 0.04 |
| Non-Polyethylene oxide containing surfactant | 0.04 |
| Di-secondary butyl peroxydicarbonate | 0.03 |
| Shortstop (variable) | 0.0075 |

The polymerization was conducted in a 3 liter reactor equipped with agitation. The polymerization was run at 57°C with an agitation of 400 RPM. The shortstop was added after 6 hours as a 1% solution in methanol except in Run No. 3 which was added as an aqueous caustic solution. Seven different shortstop materials were evaluated in the above recipe against a control with no shortstop (Run 1). The results are reported in Table I. The effectiveness of the shortstop is indicated by the change in pressure with respect to time $-\frac{\Delta P}{\Delta T}$ That is a constant pressure with respect to time would give a $-\frac{\Delta P}{\Delta T}$ value of 0. This would indicate that there was no further conversion of monomer to polymer, in other words the reaction was stopped and the resin is stabilized against free radical attack.

TABLE I

| Run | Shortstop | $\frac{-\Delta P}{T}$ (psi/min) |
|---|---|---|
| 1 | None (control) | 0.351 |
| 2 | Tetrabis methylene 3-(3,5'-di-tert-butyl-4'-hydroxyl phenyl)propionate methane | 0.358 |
| 3 | Acetone Thiosemicarbazone | 0.320 |
| 4 | α-methyl styrene | 0.310 |
| 5 | Bis phenol A | 0.244 |
| 6 | 2,6-di-t-butyl-4-methylphenol | 0.242 |
| 7 | 2,6-dimethylphenol | 0.094 |
| 8 | 2,5-di-t-amylhydroquinone | 0.01 |

As can be seen from the above results in Table I, of the materials evaluated, only the shortstop of this invention (Run 8) 2,5-di-t-amylhydroquinone was effective in stopping the polymerization. The other shortstops evaluated (Runs 2 through 7) are know shortstop agents for conventional suspension PVC processes, however, in the thickened medium suspension process, they do not work. Quite unexpectedly Run 8, 2,5-di-t-amylhydroquinone, was a very effective shortstop.

EXAMPLE II

This example is presented to show that the novel shortstops of this invention are effective in a conventional suspension PVC polymerization process. The polymerization recipe employed was as follows:

| Ingredient | Parts by weight |
|---|---|
| Vinyl Chloride | 100 |
| Water (demineralized) | 150 |
| Polyvinylalcohol surfactant | 0.08 |
| Hydroxyalkyl cellulose surfactant | 0.008 |
| Di-secondary butyl peroxydicarbonate | 0.03 |
| Shortstop (2,5-di-t-amylhydroquinone) | 0.0050 |

The polymerization was conducted in a 55 liter reactor with agitation. The reaction was run at 58°C for 6 hours and then the shortstop was added. The change in pressure with respect to time $\frac{-\Delta P}{\Delta T}$ was 0.0 thus indicating that the polymerization reaction was completely stopped and the resin stabilized against free radical attack.

EXAMPLE III

This example is presented to show that Naugard 451 functions as a shortstop in the modified (thick medium) suspension process. The same recipe was used as in Example I except that Naugard 451 was used at the 0.0075 part by weight per 100 parts by weight of monomer as the shortstop. The reaction was conducted in a 55 liter reactor. The shortstop was added as a methanol solution as in Example I. The change in pressure with respect to time $\frac{-\Delta P}{\Delta T}$ was 0.1 psi/min, thus indicating the reaction was substantially stopped by the use of the shortstop.

Although the shortstop of this Example works, it is not as fast as the smaller molecule, 2,5-di-t-amylhydroquinone. It is believed that this is due to the faster diffusion rate expected for the smaller molecular weight.

EXAMPLE IV

This example is presented to show that 2,5-di-t-amylhydroquinone can be used to shortstop resin produced by the mass process. The recipe used was as follows:

| Ingredient | Parts by weight |
|---|---|
| Vinyl chloride | 100 |
| Peroxydicarbonate initiator | 0.03 |
| 2,5-di-t-amylhydroquinone (shortstop) | Variable |

The shortstop was added between 60% and 70% conversion. Four levels of shortstop were evaluated (0.0025, 0.0050, 0.0075 and 0.0100 part by weight). All four levels effectively stopped the reaction as indicated by a pressure drop. This is different than the suspension process where when the reaction is stopped the process remains constant. In the mass process, if the exothermic reaction is stopped, the temperature decreases, thereby lowering the pressure. In the control with no shortstop, the pressure did not drop.

The resin produced in this Example was stripped and dried in the same vessel as where polymerization occurred. Mass process resin shortstopped by this invention is substantially free of initiator. The shortstop reacts with the initiator thus stabilizing the resin against free radical attack.

EXAMPLE V

This example is presented to show that 2,5-di-t-amylhydroquinone will effectively shortstop a low porosity resin. Low porosity resins are normally produced at a higher reaction temperature. The following recipe was used:

| Ingredient | Parts by weight |
| --- | --- |
| Vinyl Chloride | 100 |
| Water (demineralized) | 150 |
| Polyvinylalcohol dispersant | 0.1 |
| Hydroxy alkyl cellulose dispersant | 0.1 |
| Peroxy ester initiator | 0.05 |
| 2,5-di-t-amylhydroquinone (shortstop) | 0.005 |

The reaction was run in a 55 liter reactor at 82°C. The resin porosity was 0.1 as measured by DOP adsorption, which is a low porosity resin. The $-\frac{\Delta P}{\Delta T}$ was 0, indicating that the reaction was completely stopped by the use of 0.005 part by weight of 2,5-di-t-amylhydroquinone, and the resin is stabilized against free radical attack.

It is believed that the ability of the shortstops of this invention to function in thickened mediums and low porosity resins is due to the ability of the shortstop to diffuse through the medium and into the resin very quickly.

The response time of the shortstops of this invention is less than two minutes after injection, which is very fast. This fast reponse time makes them suitable for emergency shortstops as well as routine shortstop applications.

The polymer recovered from the runs in these examples was suitable for use in end use products such as pipe, house siding, film and molded items. Polyvinyl chloride resins produced with the shortstop agents of this invention also have improved heat stability.

The present invention has numerous advantages. For examples, the shortstopping agents of the present invention are non-toxic materials (2,5-di-t-amylhydroquinone is approved by the U.S. Food and Drug Administration for food contact) which alleviate much of the early color development problems in the finished resin or polymer. In the event of a power failure during production of the polymer the shortstopping agent can be added immediately to slow down and terminate the polymerization thus eliminating possible "run-away" reactions along with potentially hazardous results. Other advantages will be apparent to those skilled in the art.

EXAMPLE VI

This example is presented to show the effectiveness of using 2,5-di-t-amylhydroquinone as a stabilizer when the stabilizer is added in the polymerization reaction vessel at the point when the desired conversion is achieved. The polyvinyl chloride resin of this example is a spherical particle polyvinyl chloride homopolymer made by the modified suspension (thick medium) process described in U.S. Patent 4,435,524. In addition to the stabilizer of this invention (Run No. 5), two known stabilizers were evaluated (Runs 2 and 3). Also a catalyst destroyer was added in Run 4 and a control with no stabilizer was evaluated in Run 1. The stabilizer additives were used at a level of 0.0075 part by weight per 100 parts by weight of monomer. The maximum HCl evolution rate at 190°C rate was measured. The results are shown in Table II.

TABLE II

| Run No. | Stabilizer | Maximum HCl (mole%/min) evolution rate |
|---|---|---|
| 1 | None - Control | 0.0495 |
| 2 | Bis Phenol A | 0.0420 |
| 3 | 2,6-di-t-butyl-4-methylphenol | 0.0405 |
| 4 | Acetone Thiosemicarbazone | 0.0555 |
| 5 | 2,5-di-t-amylhydroquinone | 0.0210 |

As can be seen from the data of Table II, the stabilizer of this invention (Run No. 5) was very effective in reducing the HCl evolution rate. Runs 2 and 3 are known stabilizers but they were only partly effective. The results of this experiment are very unexpected.

EXAMPLE VII

This example is presented to show that 2,5-di-t-amylhydroquinone is effective in delaying the color development in a film grade polyvinyl chloride resin. In this example, two compositions of this invention, 0.0100 and 0.0500 part by weight of stabilizer (2,5-di-t-amylhydroquinone) per 100 parts by weight of resin were mixed with an unstripped dry resin. The resin was exposed to air at 104°C. Every 10 minutes a sample was taken and dissolved as a 10% solution in tetrahydrofuran (THF) and the optical density measured at 360 nanometers. A control was also run with the same resin but with no stabilizer. The results are shown in Table III.

TABLE III

| | | Optical Density | |
|---|---|---|---|
| Exposure Time (min.) | Control Resin | Control with 0.0100 part by wt. stabilizer | Control with 0.0500 part by wt. stabilizer |
| 0 | 0.012 | 0.020 | 0.018 |
| 10 | 0.014 | 0.021 | 0.020 |
| 20 | 0.032 | 0.022 | 0.021 |
| 30 | 0.063 | 0.032 | 0.024 |
| 40 | 0.100 | 0.066 | 0.024 |
| 50 | 0.138 | 0.080 | 0.029 |

The data in Table III shows that the stabilizer of this invention is effective in reducing the color formation in polyvinyl chloride resins. An important factor is the delay time before the onset of color development. With the stabilizer of this invention used at the 0.0100 part by weight per 100 part by weight of polymer, the onset time is about twice as long as with the control. When the stabilizer is used at the 0.0500 part by weight per 100 part by weight of polymer, the improvement is even more dramatic. After 50 minutes, the sample with the higher level of the novel stabilizer had not even started to develop color. This is important in that it is the safety net time one has during the processing of the resin into useful articles. The very slightly higher optical density for initial samples (0 time) of the stabilized resin present no problem in that the difference is very small.

The stabilized resins of this invention are suitable for many applications. They may be compounded with fillers, colorants, lubricants, other stabilizers and the like to form vinyl halide resin compositions. They may be extruded and fused to make pipe, house siding, windows and the like. They may also be calendered into sheet form for use as films and the like.

The ability of the novel stabilizers of this invention to be added to the resin prior to its exposure to the high temperature of the steam stripping process is an important feature. Only then can the resins be protected from the polymerization vessel to the end use product.

While the present invention has been described in terms of its specific embodiments, certain modifications and equivalents will be apparent to those skilled in the art and are intended to be included within the scope of the appended claims.

**Claims**

1. A process for controlling the homopolymerization of vinyl monomers and the copolymerization of vinyl monomers with one or more copolymerizable olefinic monomers having a terminal $CH_2=C<$ grouping in the presence of a free radical yielding catalyst(s) comprising adding to the polymerization mixture containing said monomer(s) and said catalyst(s) at least one substituted hydroquinone shortstop agent having the formula:

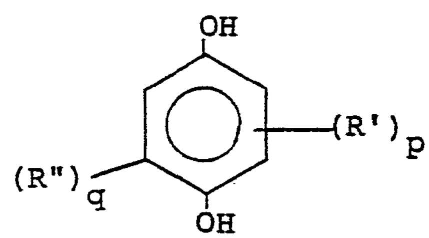

wherein $R'$ = 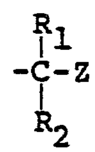 and $R''$ = 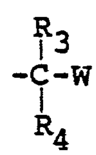

wherein p is 1 or 2 and q is 0 or 1; provided that p+q=1 or 2;

the groups $R_1$, $R_2$, $R_3$, $R_4$ are either H, $CH_3$, or $C_2H_5$ and are identical or different; the groups Z and W may be identical or different and are either H, $C_1$ to $C_{12}$ hydrocarbon, $OR_5$, $SR_5$, phenyl, alkyl benzene, $C_nH_{2n+1-k}-(X)_t-R_6$ wherein n is an integer from 1 to 20, k=1 or 2, t=0 or 1,

X= -0-or - $\overset{O}{\overset{\|}{C}}$ -O-; wherein $R_5$ and $R_6$ are H or $C_1$-$C_{12}$ hydrocarbon, CN, or $C_nH_{2n+1-k}$ CN wherein n and k are as defined above.

2. A process of Claim 1 wherein said shortstop agent is a 2,5 substituted hydroquinone having the formula:

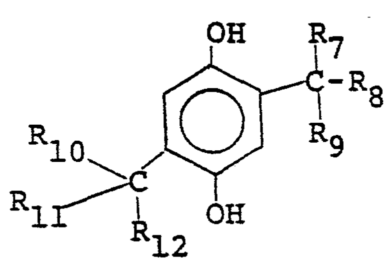

wherein $R_7$, $R_8$, $R_{10}$ and $R_{11}$ are identical or different and are either H, methyl, or ethyl. $R_9$ and $R_{12}$ are identical or different and are either H, or an alkyl having from 1 to about 12 carbon atoms.

3. A process of Claim 2 wherein $R_7$, $R_8$, $R_{10}$ and $R_{11}$ are methyl; and $R_9$ and $R_{12}$ are either methyl or ethyl.

4. A process of Claim 3 wherein said shortstop agent is selected from the group consisting of 2,5-di-t-amylhydroquinone and 2,5-di-t-butylhydroquinone.

5. A process of Claim 1 wherein the monomer is vinyl chloride.

6. A process for controlling the homopolymerization of vinyl chloride or the copolymerization of vinyl chloride with one or more copolymerizable olefinic monomers having a terminal $CH_2=C<$ grouping in the presence of a free radical yielding catalyst(s) comprising adding to the polymerization mixture containing vinyl chloride and said catalyst(s) a substituted hydroquinone shortstop agent having the formula:

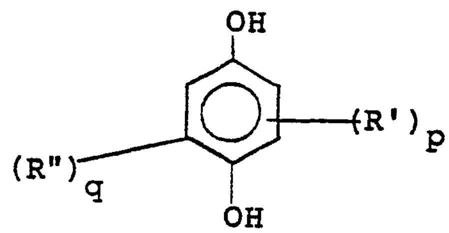

wherein R' = 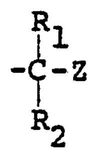 and R" = 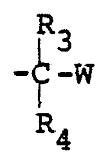

wherein p is 1 or 2 and q is 0 or 1; provided that p+q=1 or 2;

the groups $R_1$, $R_2$, $R_3$, $R_4$ are either H, $CH_3$, or $C_2H_5$ and are identical or different;

the groups Z and W may be identical or different and are either H, $C_1$ to $C_{12}$ hydrocarbon, $OR_5$, $SR_5$, phenyl, alkyl benzene, $C_nH_{2n+1-k}$-$(X)_t$-$R_6$ wherein n is an integer from 1 to 20, k=1 or 2, t=0 or 1, $X = -O-$ or $-\overset{O}{C}-O-$; wherein $R_5$ and $R_6$ are H or $C_1$-$C_{12}$ hydrocarbon, CN, or $C_nH_{2n+1-k}$ CN wherein n and k are as defined above.

7. A process of Claim 6 wherein said shortstop agent is a 2,5 substituted hydroquinone having the formula:

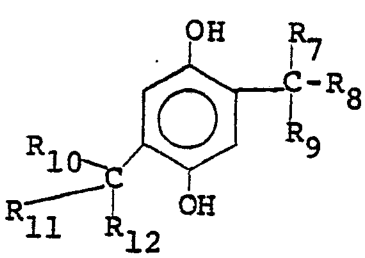

wherein $R_7$, $R_8$, $R_{10}$ and $R_{11}$ are identical or different and are either H, methyl, or ethyl; $R_9$ and $R_{12}$ are identical or different and are either H, or an alkyl having from 1 to about 12 carbon atoms.

8. A process of Claim 7 wherein $R_7$, $R_8$, $R_{10}$ and $R_{11}$ are methyl; and $R_9$ and $R_{12}$ are either methyl or ethyl.

9. A process of Claim 6 wherein said process is

conducted in an aqueous suspension.

10. A process of Claim 6 wherein said process is conducted in a thickened aqueous suspension.

11. A process of Claim 6 wherein said process is conducted in the substantial absence of water.

12. A process of Claim 6 wherein the amount of shortstop agent used is from about 0.0025 part by weight to about 0.0100 part by weight said parts by weight based on 100 parts by weight of vinyl chloride monomer.

13. A process of Claim 6 wherein said shortstop agent is added to said polymerization mixture in the form of an organic solution.

14. A process of Claim 6 wherein said shortstop agent is added to said polymerization mixture in the form of an aqueous dispersion.

15. A process of Claim 6 wherein said shortstop agent is added to the resin in the polymerization reactor.

16. A process of Claim 6 wherein said shortstop agent is added to the resin after removal from the polymerization reactor but before the resin is dry.

17. A spherical shaped polyvinyl chloride resin in particulate form having up to 50 percent by weight of one or more copolymerizable olefinic monomer having a terminal CH=C< group characterized by:

(a) said resin being stabilized against attack by free radicals;

(b) said resin has not been mixed with a stabilizer after said resin is dried;

(c) said resin having an average particle size greater than 70 microns.

18. A stabilized polyvinyl chloride resin in particulate form having up to 50 percent by weight of one or more copolymerable monomer having a terminal CH=C group, wherein said resin has no pericellular membrane and wherein said resin has not been mixed with a stabilizer after said resin is dried.

19. A stabilized vinyl halide resin composition comprising at least one stablizer compound having the formula:

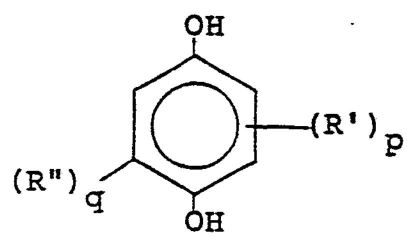

wherein R' = 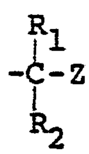 and R" = 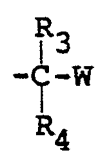

wherein p is 1 or 2 and q is 0 or 1; provided that p+q=1 or 2;

The groups $R_1$, $R_2$, $R_3$, $R_4$ are either H, $CH_3$, or $C_2H_5$ and are identical or different; the groups Z and W may be identical or different and are either H, $C_1$ or $C_{12}$ hydrocarbon, $OR_5$, $SR_5$, phenyl, alkyl benzene, $C_nH_{2n+1-k}$-$(X)_t$-$R_6$ wherein n is an integer from 1 to 20, k=1 or 2, t=0 or 1,

X= -0-or - $\overset{O}{\overset{\|}{C}}$ -O-; wherein $R_5$ and $R_6$ are H or $C_1$-$C_{12}$ hydrocarbon, CN, or $C_nH_{2n+1-k}CN$ wherein n and k are as defined above.

20. A composition of Claim 19 wherein the amount of stabilizer is from about 0.0010 part by weight to about 0.1000 part by weight said parts by weight based on 100 parts by weight of resin.

21. A method of stabilizing a vinyl halide resin

comprising adding to said resin at least one stabilizer compound having the formula;

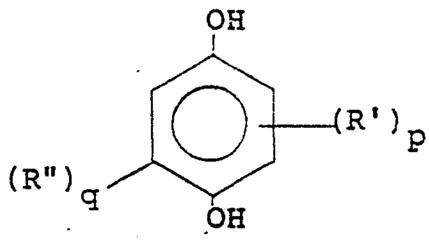

wherein R' = 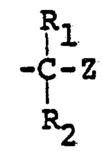 and R" = 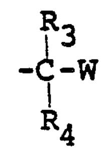

wherein p is 1 or 2 and q is 0 or 1; provided that p+q=1 or 2;

the groups $R_1$, $R_2$, $R_3$, $R_4$ are either H, $CH_3$, or $C_2H_5$ and are identical or different; the groups Z and W may be identical or different and are either H, $C_1$ or $C_{12}$ hydrocarbon, $OR_5$, $SR_5$, phenyl, alkyl benzene, $C_nH_{2n+1-k}$-$(X)_t$-$R_6$ wherein n is an integer from 1 to 20, k=1 or 2, t=0 or 1,

X= -0-or - 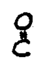 -O-; wherein $R_5$ and $R_6$ are H or $C_1$-$C_{12}$ hydrocarbon, CN, or $C_nH_{2n+1-k}CN$ wherein n and k are as defined above.

22. A method of Claim 21 wherein said stabilizer is a 2,5 substituted hydroquinone having the formula:

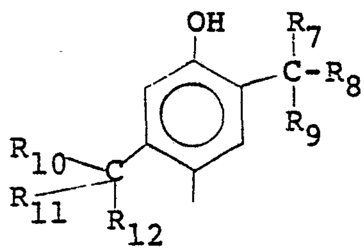

wherein $R_7$, $R_8$, $R_{10}$ and $R_{11}$ are identical or different and are either H, methyl, or ethyl; $R_9$ and $R_{12}$ are identical or different and are either H, or an alkyl having from 1 to about 12 carbon atoms.

23. A shaped article comprising at least one fused vinyl halide resin and at least one stabilizer compound having the formula:

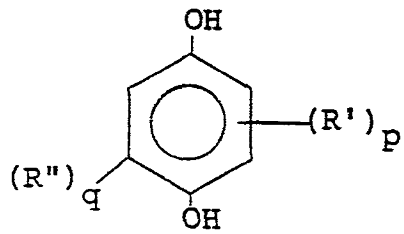

wherein R' = 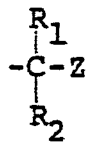 and R" = 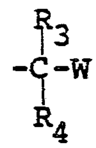

wherein p is 1 or 2 and q is 0 or 1; provided that p+q=1 or 2.

The groups $R_1$, $R_2$, $R_3$, $R_4$ are either H, $CH_3$, or $C_2H_5$ and are identical or different; the groups Z and W may be identical or different and are either H, $C_1$ to $C_{12}$ hydrocarbon, $OR_5$, $SR_5$, phenyl, alkyl benzene, $C_nH_{2n+1-k}-(X)_t-R_6$ wherein n is an integer from 1 to 20, k=1 or 2, t=0 or 1,

X= -0-or - $\overset{O}{\underset{}{C}}$ -O-; wherein $R_5$ and $R_6$ are H or $C_1$-$C_{12}$ hydrocarbon; CN; or $C_nH_{2n+1-k}CN$ wherein n and k are as defined above.